(19)

Europäisches Patentamt

European Patent Office

Office européen des brevets

(11) **EP 4 664 215 A1**

(12) **EUROPEAN PATENT APPLICATION**

(43) Date of publication:
**17.12.2025** Bulletin 2025/51

(21) Application number: **24181779.0**

(22) Date of filing: **12.06.2024**

(51) International Patent Classification (IPC):
**G05B 19/19** (2006.01)  **G05B 19/404** (2006.01)

(52) Cooperative Patent Classification (CPC):
**G05B 19/404; G05B 19/19;** G05B 2219/45165

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bystronic Laser AG**
**3362 Niederönz (CH)**

(72) Inventors:
• **Titus, Haas**
**4805 Brittnau (CH)**

• **Nino, Di Pasquale**
**3012 Bern (CH)**

(74) Representative: **Schwarz, Claudia**
**Schwarz + Kollegen**
**Patentanwälte**
**Heilmannstraße 19**
**81479 München (DE)**

Remarks:
Amended claims in accordance with Rule 137(2) EPC.

(54) **CALIBRATION OF A LASER PROCESSING MACHINE WITH RESPECT TO DIFFERENT EXCITATION FREQUENCIES**

(57)    The present invention relates to generating a frequency-dependent machine model, in which oscillation data are stored which may be used to compensate a frequency-based oscillation behaviour of a laser processing machine (LPM) with a processing head (H) which is to be moved with at least two drive axes, having the following method steps:
- Reading in or generating (S1) a setpoint function, wherein the setpoint function is configured to excite the laser processing machine (LPM) with at least two defined different frequencies for triggering a frequency-based oscillation behaviour as response of the laser processing machine (LPM) to the excitation;
- Generating (S2) control commands for the at least two drive axes for instructing the processing head (H) of the laser processing machine (LPM) to move along a target trajectory, whereby the control commands implement the generated or read-in setpoint function (SPF1, SPF2);
- Transmitting (S3) the generated control commands to the laser processing machine (LPM) for execution for machining (S4) a workpiece, during which the laser is at least temporarily switched on;
- Detecting (S5) the frequency dependent response of the laser processing machine (LPM) by means of at least one optical sensor (S) for detecting an actual trajectory of the machined workpiece;
- Determining (S6) a result, comprising the actual trajectory in relation to the instructed target trajectory, wherein the result serves to calculate and store frequency-dependent oscillation data for generating the frequency-dependent machine model.

Figur 3

**Description**

The present invention relates to the field of laser processing and refers to the detection and compensation of a laser processing machine's vibration behaviour. In particular, the invention relates to a method for generating or updating a frequency-dependent machine model, which may be used to compensate a frequency-based oscillation behaviour of a laser processing machine, a processing module, which is configured for executing the method mentioned before and a calibration module, which is configured for executing a calibration method as well as a computer program. Further, the invention refers to a calibration method for generating calibration data by using the generated model.

In laser processing, a laser processing machine is used for processing a workpiece, like e.g. cutting or welding a workpiece. The laser processing machine comprises inter alia a processing head, which is to be moved with respect to the workpiece in order to process the workpiece according to a cutting plan. The processing head may be activated by at least one drive axis, in particular three drive axis in each space dimension. Each of the drive axes may be activated by at least one motor.

The reachable motion accuracy depends of the mechanical or physical machine response, in response to the excitation (movement instructions for the machine). The movement of the masses of the head and/or other parts of the laser processing machine induces unwanted oscillations which may lead to contour errors and/or other unwanted effects.

However, each machine has different properties (masses, components, etc.) which result in different oscillation behaviour, like oscillation in one of the set of drive axes. If this unwanted oscillation behaviour should be compensated, it is necessary to compensate it differently for every machine. It is not possible to apply one and the same compensation scheme to different machines.

Therefore, the object of the present invention is to determine the oscillation behaviour for a set of laser processing machines for being able to compensate unintended oscillation. A further object, is to improve laser processing quality.

This object is solved by the independent claims, in particular by a method for generating a frequency-dependent machine model, a calibration method for generating calibration data by using the generated frequency-dependent machine model, a processing module and a calibration module as well as a computer program.

In the following, the invention will be described with respect to the claimed method first. Features, advantages or alternative embodiments, mentioned with respect to the method can be assigned to the other claimed objects (e.g. the computer program or a device, in particular the processing or calibration module, or system or a computer program product) and vice versa. In other words, the system, apparatus or device can be improved with features described or claimed in the context of the method and vice versa. In this case, the functional features of the method are embodied by structural units of the apparatus or device or system and vice versa, respectively. The method may refer to a software implementation and the device may refer to a hardware implementation. Generally, in computer science a software implementation and a corresponding hardware implementation (e.g. as an embedded system) are equivalent. Thus, for example, a method step for "storing" data may be performed with a storage unit and respective instructions to write data into the storage. For the sake of avoiding redundancy, although the device may also be used in the alternative embodiments described with reference to the method, these embodiments are not explicitly described again for the device. In principle, the respective device or apparatus claim is configured to carry out the claimed method.

According to a first aspect the object is solved by a method for generating (generating anew or updating an already existing) a frequency-dependent machine model. The frequency-dependent machine model (in short: the model) stores oscillation data. The term "model" is thus to be interpreted as a physical oscillation model. The oscillation data may be used for different purposes, in particular may be used to compensate a frequency-based oscillation behaviour of a laser processing machine particular a resonant frequency-based oscillation behaviour, and/or to determine wear and/or tear of the system. Oscillation data may refer to the laser processing machine and thus may be construed as laser processing machine oscillation data. The laser processing machine, LPM, comprises a processing head. For or during laser processing, the laser processing head (in short: head) is to be moved relative to the workpiece, in particular with at least two drive axes. The method comprises the following method steps:

- Reading in a setpoint function (in short also: SPF) or reading in parameters for generating a SPF. The setpoint function, SPF, is configured to excite the laser processing machine with at least two defined different frequencies for triggering a frequency-based oscillation behaviour as response of the laser processing machine to the excitation;
- Generating control commands for the at least two drive axes for instructing the processing head of the laser processing machine to move along a target trajectory, whereby the control commands implement the generated SPF;
- Transmitting the generated control commands to the laser processing machine for instructing the laser processing machine to execute the same for processing or machining a workpiece, during which the laser is at least temporarily switched on;
- Detecting the frequency dependent response of the laser processing machine by means of at least one sensor, in particular an optical sensor, for detecting an actual trajectory of the machined workpiece; in particular the optical sensor may be configured for detecting an actual trajectory of the applied laser, i.e. laser beam on the workpiece, or with other words the effect of the laser, when or after machining (e.g. cutting) the workpiece;

- Determining a result, comprising the actual trajectory in relation to the instructed target trajectory, wherein the result serves to calculate and store frequency-dependent oscillation data for generating the frequency-dependent machine model.

In prior art, it is known to determine the oscillation behaviour in dependence of the trajectory on which the head is to be moved, e.g., in order to compensate in small corners of a trajectory differently than in straight lines. In prior art, a frequency dependent determination of the oscillation behaviour is not known. However, with the frequency dependent determination of the oscillation behaviour, the technical effect and the technical advantage arises, that oscillation detection of the vibration behaviour of the machine is possible, which was not possible in prior art. Subsequently, a calibration in relation to the oscillation behaviour of the machine is possible, which can be carried out once during setup and/or during or after commissioning/installation of the machine, for example. So, according to the solution presented herein, the generated model is not (only) optimised for individual parts or a specific cutting plan (e.g., a single trajectory), but for the entire excitation spectrum which is specified (test frequencies 5, 10, 15,... Hz).

The general concept of this invention is to apply (by e.g. engraving or cutting) a frequency-changing function (also: setpoint function) on the workpiece (e.g., metal sheet) and measuring the engraved curve, which allows to fit a model that can be used for several use cases, which will be explained in more detail below. Every machine is different and it is possible to provide a machine-specific model (and subsequent calibration). It is also possible to apply conservative standard settings. An individually (for each machine) identified model can be used to compensate remaining errors. Further, standard parameters can be individually optimized/calibrated.

The term "generating" is to be construed as creating or generating the model anew or as updating or adapting an already existing initial model.

The term "oscillation" is used in this application for two aspects: On the one hand it refers to the excitation oscillation with which the system is excited and on the other hand it refers to the respective (system) response in reply to the excitation. The excitation oscillation is defined and/or set in the SPF. The system response typically might be a continuous oscillation.

The frequency-dependent machine model (in short: model or machine model) is a machine model, which is specific for the respective machine and/or its operating conditions, but valid for a plurality of cutting plans. Operating conditions may refer to temperature, humidity, geometric parameters, inertia, wear and/or other physical parameters of the LPM. Operating conditions may alternatively or in addition refer to accessories implemented in or added to the LPM, and/or size and shape thereof or of parts of the LPM.

The model may comprise differential equations, e.g. in $4^{th}$ order or even higher. The model may be a state space model.

The model is frequency-dependent. With other words, the model is specific for a set or certain excitation frequencies for the system, in particular the processing head and/or further components of the LPM, is excited with. The resulting system response to this excitation again is dependent on the excitation frequency and is stored in the model.

Alternatively or in addition, a set of set point functions may be used, for example two. In particular, a first and a second SPF may be used.

The first SPF may be defined as a function having movement components in e.g., the X- and/or Y direction, preferably in both directions.

The model is configured to store oscillation data. Oscillation data may represent the frequency-dependent oscillation response of the laser processing machine to an excitation according to a SPF, in particular the first or second SPF. The oscillation data may be used in a subsequent phase to compensate the frequency-based oscillation behaviour of a laser processing machine with a processing head during movement which is controlled by means of at least two drive axes. The frequency-based oscillation behaviour in particular covers resonant oscillations of the laser processing machine and parts thereof. But, the model is not limited to resonant frequencies.

The model is valid for all laser processings to be executed with the laser processing machine irrespective of or not specific for the part to be processed and irrespective of or not specific for the trajectory of the part to be processed. Alternatively or in addition it is not specific for a certain processing, e.g., in case of cutting: it is not specific for a certain trajectory to be cut or cutting plan.

The frequency-based oscillation behaviour of the laser processing machine laser processing machine may in particular be a resonant frequency-based oscillation behaviour of the complete laser processing machine with all its components (e.g. head, drives etc.).

An initial model which may be updated with the suggested method may be based on differential equations, such as those by Zirn and Weikert (Modelling and Simulation of Highly Dynamic Manufacturing Systems, https://www.springer.com/de/book/9783540258179 ). The initial model may be a two-mass model, e.g., used by Haas (Set Point Optimisation for Machine Tools, https://doi.org/10.3929/ethz-b-000271470 ), where the position of the laser beam is described using a 4th order differential equation system.

The initial model may alternatively or in addition be based on model reductions of finite element models, FEM, see for example (N. Lanz, D. Spescha, S. Weikert and K. Wegener, "Efficient Static and Dynamic Modelling of Machine Structures with Large Linear Motions," International Journal of Automation Technology, vol. 12, pp. 622-630, 2018).

The optical sensor may be or may comprise a camera. The camera can preferably be arranged coaxially or centrally to the laser beam optics and used to detect the process zone. Several cameras can also be provided or attached to the LPM. The camera can also be mounted with an offset and not coaxially; in this case, the offset must be known and is taken into account when reconstructing the path actually travelled by the processing or cutting head. In addition or alternatively, the optical sensor may be or comprise a microscope, a coordinate measuring device, a camera integrated in the processing head and/or an external smartphone camera, e.g. one with a macro lense, digitally coupled with a processor, which implements the method described above. Also, a combination of the above-mentioned alternatives may be applied by means of using sensor fusion methods. Alternatively or in addition, a verification of the detected sensor signals of a first optical sensor may be applied by using a second sensor. The second sensor may be non-optical, e.g. a tactile sensor.

Alternatively or in addition, the camera can be coupled (with respect to control commands and/or physically) to an illumination source. In a further advantageous embodiment of the invention, the method may comprise to issue illumination control commands to trigger the activation or switching on of an illumination source so that, for example, an illumination source, in particular an illumination laser, is switched on synchronously with the capture of images or optical signals detected by the optical sensor. This serves to optimize image capture and illumination of the process zone. The illumination source can be arranged in or on the camera or at another position and act directly or indirectly (by reflection) on the process zone.

Movement of the laser processing machine may be actuated by at least one SPF of a set of setpoint functions. Movement of the laser processing machine may be actuated by at least two drive axes in X- and Y-direction, spanning a plane parallel to the workpiece and/or support table. For example, 2 drive axis may be used in each space direction (X, Y, and Z direction). Preferably, two drives may be used in X and one in Y and one in Z direction. The laser processing machine may be configured with at least one motor for each driving axis. It is also possible to implement and/or use more than one motor for each drive axis. For example, a first motor for coarse movement and a second motor for fine-tuned movement. Generally, mechanical and "optical" axes can also be combined. This is possible, for example, with a laser processing machine that has a Dynamic Beam Shaping (DBS) system.

As already mentioned, preferably, there is a set of SPFs which are applicable. In general, using one of the set of SPFs is enough, but they can also be combined for a better accuracy.

The setpoint function may be provided in at least one of two different versions: A first and a second SPF. In the following: The general term "SPF" may refer to the first and/or the second SPF. The first and/or second setpoint function is configured to excite the laser processing machine with defined different frequencies, in particular in X- and Y-direction, of a predefinable frequency range for triggering a (in particular: resonant) frequency-based oscillation behaviour of the laser processing machine. This (in particular resonant) frequency-based oscillation behaviour is detected as system response. The at least two defined different frequencies of the frequency range may be selected to be discrete or continuous. The frequency range may be defined in a preparation step, e.g. by means of a field of a human machine interface, HMI. In particular, the frequency of the exciting oscillation may be chosen to be continuously increasing or decreasing in the predefined frequency range and/or has discrete measurement points at specific preset frequencies of the frequency range.

The setpoint function is a function which may define a sequence of setpoints which may define a target trajectory. The setpoint function may be configured such as a (in particular resonant) frequency-based oscillation behaviour of the laser processing machine and/or partes thereof is excited. The setpoint function is frequency-changing, i.e. frequency-dependent. The setpoint function is a time-dependent and position-dependent function for the head of the laser processing machine. It defines for the head of the laser processing machine at least two orthogonal axes (e.g., X and Y, or X and Z, or Y and Z) for each point in time.

Machining (processing) the workpiece by executing the generated control commands may comprise engraving or cutting a target trajectory or at least on a part of the target trajectory. Machining (processing) the workpiece comprises controlling movement of the processing head by means of at least two drive axes. Machining the workpiece may comprise embossing the workpiece with a metal pin, e.g., scratching with a needle or even applying a trajectory with a pen. Alternatively or in addition, machining can also be done with a calibration device, for example consisting of a glass plate and a needle for scribing or a cross-grid measuring device.

Executing the generated control commands may be delimited with respect to an area, also referred to as working space. With this, the step of executing the generated control command may be accelerated and finally the calibration process and/or the process for model generation may be accelerated. For example, the working space may be a central area on the workpiece and/or on a support table. The working space may be defined by an area around the central X- and/or Y positions of the driving axes.

The workpiece to be processed, in particular to be cut can be flat (2-dimensional) or 3-dimensional (e.g. in the form of a hollow body, in particular a tube). The workpieces can be made of metal or an alloy or plastics or combinations thereof. The workpieces can be sheet metal parts or sheet metal tubes, for example.

In case of tube cutting (by means of a tube cutting machine), the influence of the changing mass during processing must be considered in particular. In tube cutting systems, the entire tube is moved in the X direction. Several parts are often cut from one tube. Once a part has been cut, it is separated from the rest of the tube, resulting in significant changes in mass.

Exactly this effect of changing mass is taken into account by the generated frequency dependent machine model according to the present invention. This modelling of the change in mass according to this invention is relevant and/or thus may also be used for controlling the rotational axis of a tube cutting machine.

Alternatively or in addition, the at least two drive axes may be parallel to a plane of the workpiece and may be in particular an X-axis or a Y-axis or Z-axis of the laser processing machine.

Alternatively or in addition, the first drive axis may be parallel to a plane of the workpiece and may be in particular an X-axis or a Y-axis of the laser processing machine.

The laser processing machine may be a laser cutting machine, in particular a flatbed cutting machine. The laser processing machine comprises a laser. The laser is a high-power laser, in particular for metal processing, which is operated in the power range of more than 1 kW and preferably in the range of 1 - 100 kW, in particular 4 - 100 kW. The laser processing machine can preferably be part of a laser processing system with a loading and unloading system, an automation system and/or an automatic sorting system. The laser processing machine can be configured for cutting flat workpieces, in particular made of metal (e.g. metal or sheet metal panels), and/or tubular workpieces, in particular in the context of industrial production.

The laser processing machine is applied for machining, in particular engraving or cutting, a workpiece. The machining may be executed to completely or partially cut the workpiece and is carried out according to control commands from a control system. The productive cutting is carried out according to a cutting plan, which can, for example, specify certain contours on a sheet of metal. Typically, a plurality of such cutting plans is executed on one single machine one after the other. The model, generated with the method described above, is valid for all these cutting plans. After cutting a sheet of metal, for example, the differently contoured, finished cut parts can be separated from the remaining sheet metal. The cutting plan defines in which order, on which trajectory and/or with which cutting parameters parts are to be cut from the workpiece. Several contours can therefore be cut from the workpiece, whereby the laser is activated for cutting and can be deactivated for movement between the parts to be cut. The cutting parameters may specify inter alia focus position, gas pressure, and/or laser power, etc.

Detecting the frequency-dependent response of the laser processing machine may be executed in situ. Detecting the frequency-dependent response may be executed during execution of a calibration run, i.e. before executing productive cuts. The machining of the workpiece may be e.g., an engraving in a test workpiece.

The actual trajectory may refer to a trajectory which was executed by the processing head. The actual trajectory may refer to a sequence of laser beam positions, in particular tool center points (TCP). This actual trajectory may differ from the target trajectory due to dynamic behaviour of the laser processing machine, in particular due to oscillations and/or a superposition of oscillations of the laser processing machine and parts or components thereof.

The deviation between an actual trajectory (measured) and the target trajectory corresponds to the contour error, which may be compensated automatically after calibration.

The excitation of the laser processing machine according to the setpoint function may comprise harmonic and/or non-harmonic oscillations and/or superpositions of oscillations.

The result may be a digital dataset. The result comprises a representation of the actual trajectory (measured) and the target trajectory (instructed). The result may comprise or may serve to calculate a deviation between the actual and the target trajectory. The deviation may be used to calculate the frequency-dependent oscillation data for generating the frequency-dependent machine model.

Determining the actual trajectory and thus, indirectly determining the result, may comprise an image processing-based determination and/or a non-image based determination.

Image processing-based determination can comprise on the one hand to determine the cutting trajectory with an image processing algorithm and on the other hand to determine the amplitude of the cutting width (kerf width). For a first setpoint function, this means that the amplitude between the maximum and minimum of the oscillation, e.g. in the Y-direction, is determined. For a second setpoint function (circles), both the X-axis amplitude and the Y-axis amplitude are determined (e.g., diameter of a circle and/or auxiliary axes of an ellipse). The image processing-based determination may comprise image segmentation algorithms.

Alternatively or in addition, non-image processing-based determination may be applied, for example by making use of the fact that the engraved curve or trajectory can be measured using other sensors, such as a laser measurement, or by manual measurement.

Alternatively or in addition, the excitation of the laser processing machine according to the setpoint function is defined by oscillation parameters, comprising an amplitude and/or a frequency and/or in particular a resonant frequency of the laser processing machine and/or parts thereof. The oscillation parameters and/or the frequencies refer to oscillation of the whole moved masses of the laser processing machine. This mainly comprises the head but may also comprise drive axes and/or further components, which e.g., may be constantly or temporally attached or fixed to the laser processing machine.

Alternatively or in addition, the frequency of the (in particular exciting) oscillation may be chosen to be continuously increasing or decreasing in a predefined frequency range and/or has discrete measurement points at specific preset frequencies of the frequency range.

The frequency range may be an interval in between 0 and 90 Hz, in particular 10 and 80 Hz and more in particular 30 and 80 Hz.

Alternatively or in addition, a first setpoint function comprises a superposition of at least 2 movements of the processing head:

- A linear, in particular non accelerated, movement in the direction of a first drive axis;

- An oscillation with a frequency in the direction of a second axis and/or

- Optionally: A linear movement in the direction of the second axis to overcome a static friction.

The second axis may be understood as oscillation axis.

Static friction may exist for components of the driving system, comprising the driving axis and/or components thereof. Static friction may be the cause of contour deviations (between instructed trajectory and real, actual trajectory).

The first axis may be the X-axis and the second axis may be the Y-axis. Alternatively or in addition, the first axis may be the Y-axis and the second axis may be the X-axis. Alternatively or in addition, the first axis may be an axis with X and Y components and the second axis is orthogonal to the first one, wherein the X- and Y- axes are parallel to a plane spanned by the workpiece and/or support table.

The first axis may be orthogonal to the second axis. This is especially true for flatbed laser cutting machines. Although being more complex in the calculations, it is generally possible to use other constellations, where first and second axis are not perpendicular. This is important, for tube cutting machines. Here, the axes may have non-linear relations, for example rotation of a tube with square cross section around the X-axis. Non-linear relations may come from rotational axis.

Alternatively or in addition, the target trajectory is instructed according to the second setpoint function such as having excited oscillation movement components in at least the first and second axis for being able to later in a subsequent phase compensate movements with the first and second axes components.

Alternatively or in addition, the control commands for the first setpoint function are executed in at least two orthogonal dimensions.

Alternatively or in addition, the first and/or second setpoint function covers a frequency sweep in a predefined frequency range of different excitation frequencies, wherein defined different frequencies of the frequency range may be selected to be discrete or in case of the first setpoint function to be alternatively continuous.

Alternatively or in addition, a second setpoint function comprises a set of circles, each exciting the laser processing machine at a specific frequency, resulting in different diameters of the circles.

The circles may serve as target trajectory to be compared with the actual engraved trajectory. Due to the geometric nature of the circle, they comprise X- and Y-axis movement components. The technical advantage of the second setpoint function is that the determination of the deviations may be determined for both, the first and second axis. Determining the actual trajectory in relation to the instructed target trajectory according to the second setpoint function may be executed by the elongation of the machined circle in the direction of at least one axis and a determination of a thickness of the machined trajectory without oscillations

Alternatively or in addition, the laser is activated in phases or continuously and/or with different laser power parameters during the execution of the control commands, in particular after a transient phase of adverse or unintentional oscillations.

Alternatively or in addition, detecting the actual trajectory comprises the following steps which may be executed in arbitrary sequence:

- measuring a thickness of the actual trajectory without oscillation in an image acquired by the optical sensor;
- measuring an amplitude, preferably a peak-to-peak amplitude, of the machined, in particular engraved, target trajectory according to the first SPF;
  and/or
- measuring a dimension (e.g., a diameter) of the machined, in particular engraved, target trajectory according to the second SPF;

based on the measured amplitude and/or measured diameter: calculating a movement of the TCP.

For the execution of the above-mentioned measurements, the laser parameter setting and/or the operational setting of the laser processing machine need to be identical. The operational setting at least comprises a temperature, e.g. operating (surrounding) temperature.

Alternatively or in addition, determining the actual trajectory in relation to the instructed target trajectory may be executed by means of image processing, in particular by comparing the actual trajectory with the instructed trajectory and/or by calculating the actual trajectory based on a detected amplitude, in particular peak-to-peak amplitude, according to the first setpoint function of the machined trajectory and a determination of a thickness of the machined trajectory without oscillations.

Alternatively or in addition, determining the actual trajectory in relation to the instructed target trajectory according to the second setpoint function may be executed by the elongation of the machined circle in the direction of at least one axis and a determination of a thickness of the machined trajectory without oscillations.

The object above is also solved by a calibration method for using a generated frequency-dependent machine model, which has been generated with a method as described before for generating calibration data for calibrating the laser processing machine with respect to a compensation of a frequency-based oscillation behaviour of a laser processing machine laser processing machine , in particular after commissioning and/or before a production phase for executing productive cuts according to a set of different cutting plans. A major advantage of this calibration method is that, the calibration is valid for different uses of the laser processing machine, comprising different cutting plans to be executed on that machine. The calibration is valid and specific for a certain laser processing machine.

The vibration behaviour of the drive axes and optionally other necessary information can be presented to the user, e.g., visually, e.g, by means of a human machine interface, HMI and respective outputs. Typically, bode plots are used to display the amplitude and phase over the frequency range. It is preferable to use the display of the amplification factor (amplitude in the Bode plot greater than 0dB).

Generally, a further advantage of the invention is that the operator does not need to know the vibration behaviour, as the compensation is performed by the model. Once the calibration procedure is completed, it can be decided whether or not to accept the model adjustments (or not) and/or choose whether or not to run the procedure again (e.g., with different parameters for generating the SPF) and/or to determine the conditions for applying the model adjustments and/or calibration.

Alternatively or in addition or in a preferred embodiment, the calibration method for generating calibration data may be used for error compensation with dynamic beam shaping system or without dynamic beam shaping system.

Alternatively or in addition or in a preferred embodiment, in the calibration method, a selection signal may be received, in particular via a user input, indicating, whether the generated calibration data should be applied for calibration (of the laser processing machine). Alternatively or in addition the selection signal may indicate the conditions for applying the same, comprising a set of indications, comprising at least one of a time indication, a user profile indication and/or a machine condition indication.

With other words, the calibration method may result in a calibration suggestion (for example to be provided on an HMI for validation) for (e.g., automatically) calibrating the laser processing machine. The calibration suggestion may be executed instantaneously or later or if certain conditions are fulfilled, which are defined by a set of indications. The set of indications may comprise a time indication, defining, when the calibration is to be executed, a user profile indication, defining which user profiles are admitted to execute a calibration (e.g., controlling that only experienced users are allowed to execute a calibration in contrast to beginners or less experienced users) and/or a machine condition indication, defining particular operating conditions of the laser processing machine. The operating conditions may e.g., comprise a new set up of the laser processing machine, a new configuration, other temperature conditions, wear of machine components, time before expected / planned service, time after service intervention, etc.

The calibration method may automatically be initiated after maintenance, repairing tasks (e.g., lubrification, change of cutting head etc.) and/or after the addition or removal of components or features of the laser processing machine (detection eye etc.).

In another aspect, the invention refers to a processing module configured for executing a method as described before for generating a frequency-dependent machine model, in which oscillation data are stored which may be used to compensate a frequency-based oscillation behaviour of a laser processing machine laser processing machine with a processing head which is to be moved with at least two drive axes. The processing module comprises:

- An excitation interface, configured for reading in a SPF or reading in parameters for generating a setpoint function, SPF, wherein the setpoint function is configured to excite the laser processing machine with at least two defined different frequencies for triggering a frequency-based oscillation behaviour as response of the laser processing machine to the excitation;
- wherein the processing module is configured for generating control commands for the at least two drive axes for instructing the processing head H of the laser processing machine to move along a target trajectory, whereby the control commands implement the generated or read SPF;

- A control interface for transmitting the generated control commands to the laser processing machine to instruct the laser processing machine to execute the generated control commands for machining a workpiece, during which the laser is at least temporarily switched on;

- A sensor interface to at least one optical sensor, which is configured for detecting an actual trajectory of the machined workpiece, based upon which the processing module is configured for detecting the frequency dependent response of the laser processing machine;

- wherein the processing module is configured for determining a result, comprising the actual trajectory in relation to the instructed target trajectory, wherein the result serves to calculate and store frequency-dependent oscillation data for generating the frequency-dependent machine model.

The processing module may comprise an output interface for providing the result and/or the frequency-dependent oscillation data. The frequency-dependent oscillation data may be used subsequently to automatically or semi-automatically calibrate the laser processing machine.

In another aspect, the invention refers to a calibration module for calibrating a laser processing machine, which is configured to execute the calibration method as described above.

The calibration module and/or the processing module are electronic units, which may be part of a computer system, comprising a memory, digital processing units, interfaces and/or other electronic parts.

In still another aspect, the invention relates to a calibration system with such a calibration module and a laser processing machine.

The method, modules and systems described herein, may be used for predictive maintenance of the LPM. It is possible to store rules, defining repetitions of the proposed procedure after a certain time. The change in the identified model can be used to analyze the condition of the laser processing machine (e.g. lubrification, wear). It is also possible to use the generated model for machine calibration. The engraved pattern might be useful for a dynamic calibration of the machine at the customer site, i.e. after launch and/or commissioning of the LPM and thus in a time period, wherein the LPM has already been used for productive cuts.

In another aspect, the invention relates to a computer program comprising program elements which induce a processing module to carry out the steps of the method for generating a frequency-dependent machine model or a calibration method, when the program elements are loaded into a memory of the processing module.

The computer program may also be provided for download, e.g., via a radio or cellular network, the Internet and/or a host computer. Alternatively, or in addition, the method may be encoded in a Field-Programmable Gate Array (FPGA) and/or an Application-Specific Integrated Circuit (ASIC), or the functionality may be provided for download by means of a hardware description language.

The properties, features and advantages of this invention described above, as well as the manner they are achieved, become clearer and more understandable in the light of the following description and embodiments, which will be described in more detail in the context of the drawings.

This following description does not limit the invention on the contained embodiments. Same components or parts can be labelled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments de-scribed hereinafter.

BRIEF DESCRIPTION OF THE DRAWINGS

Fig. 1        is an overview of the structure and architecture of a processing module for generating a frequency-dependent machine model for a particular laser processing machine, which may interact with a calibration module according to a preferred embodiment of the present invention;

Fig. 2        is a schematic figure of a laser processing machine with several drive axes and a processing head to be moved for machining a workpiece;

Fig. 3        is a flow chart of a method for generating a frequency-dependent machine model for a particular laser processing machine according to a preferred embodiment of the present invention;

Fig. 4        is a schematic figure showing possible options to use the generated machine model for different use cases;

Fig. 5a)-5c)     shows examples of a first setpoint function and the corresponding engraved curve with zoom on two sections;

Fig. 6a) -c)     shows other examples of a first setpoint function with respect to position, velocity and acceleration;

Fig. 7     is a spectrogram of a first SPF;

Fig. 8a), b)     shows examples of a second setpoint function (circles) with engraved line and a fade in and fade out spiral (Fig. 8b);

Fig. 9     examples of X-Axis setpoints of the second setpoint function with different phases for one circle;

Fig. 10a), b)     shows examples of an amplitude measurement and a TCP measurement for the first SPF at different excitation frequencies;

Fig. 10c), d)     shows examples of an amplitude measurement and a TCP measurement for the second SPF at different excitation frequencies;

Fig. 11     shows an example measurement of the thickness of an engraved line without oscillation;

Fig. 12     exemplary shows the robustness of the amplitude measurement algorithm against some wrong segmentations.

DETAILED DESCRIPTION OF THE DRAWINGS

Any reference signs in the claims should not be construed as limiting the scope.

The present invention considers the fact that contour errors are dependent on the frequency the machine is excited with (frequency distribution of set points). It has been shown that the contour errors are frequency-dependent by Matthias Fauser, 1997. Based on the frequency domain of a system, it's resulting contour deviations might be shown. Thus, engraving or cutting or otherwise applying a frequency-changing function on the metal sheet and measuring the engraved curve allows to identify the frequency response of the system (i.e. the laser processing machine) describing the behaviour between input command position and TCP position.

Generally, the focus of the present invention is on the procedure of generating a machine model (also: Tool Center Point, TCP, model). The invention suggests to provide a frequency-dependent machine model for each individual machine and use it to achieve smaller contour errors and/or shorter machining time for example, the generated model can be used in a subsequent step to estimate contour errors and compensate those by a dynamic beam shaping system or a direct adaption of the trajectory of the mechanical axes. It is also possible to update the machine calibration settings and/or controller parameters by using the measured contour errors. Alternatively, the model of a Model Predictive Control (MPC) approach can be generated or updated.

The setpoints of the setpoint function (also: SPF) refer to or comprise motion commands or instructions for the drive axes of the laser processing machine. The setpoints of the setpoint function are transformed in the Fourier space (time domain -> frequency domain) to get the frequency content and/or distribution of the setpoints.

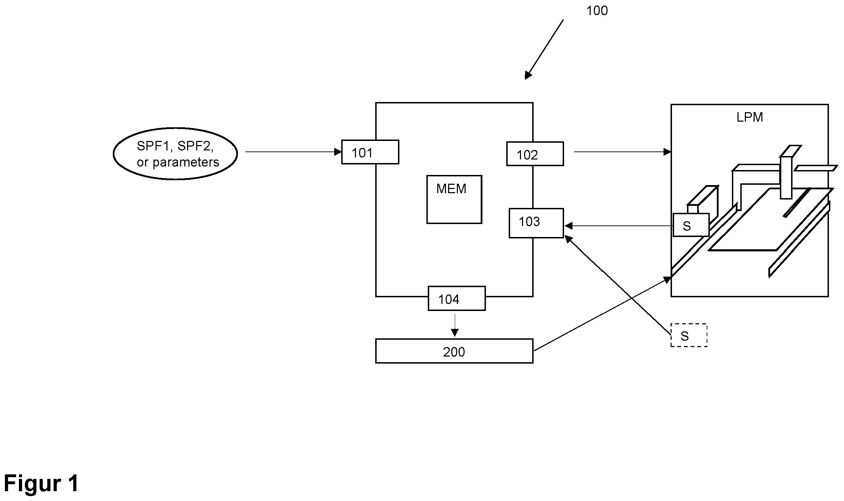

Fig. 1 schematically illustrates an architecture of a processing model to be used in a calibration system.

The processing module 100 is configured for executing a method for generating a frequency-dependent machine model, in which oscillation data are stored which may be used to compensate a frequency-based oscillation behaviour of a laser processing machine laser processing machine. The laser processing machine laser processing machine comprises at least one processing head H which is to be moved with at least two drive axes, preferably three drive axes in the three space dimensions X, Y, and Z.

The processing module 100 comprises an excitation interface 101, which is configured for reading in (receiving an already existing) SPF or reading in parameters for generating (a new) a setpoint function, SPF, wherein the setpoint function is configured to excite the laser processing machine laser processing machine with at least two defined different frequencies for triggering a frequency-based oscillation behaviour as response of the laser processing machine laser processing machine said excitation.

The processing module 100 is configured for generating control commands for the at least two drive axes for instructing the processing head H of the laser processing machine laser processing machine to move along a target trajectory, whereby the control commands implement the generated or read SPF.

The processing module 100 further comprises a control interface 102 for transmitting the generated control commands to the laser processing machine laser processing machine via a wireless or wired data transmission channel (e.g., internet, WiFi, and/or radio transmission etc.) to instruct the laser processing machine laser processing machine to execute the generated control commands for machining a workpiece, during which the laser is at least temporarily switched on.

The processing module 100 further comprises a sensor interface 103 to at least one optical sensor S, which is configured for detecting an actual trajectory of the machined workpiece. The sensor S may be implemented in the laser processing machine laser processing machine as can be seen in Fig. 1 with the solid lined rectangle around the reference numeral S. Alternatively or in addition, the sensor S may be implemented or arranged external to the laser processing machine LPM, which is Fig. 1 is depicted as hatched line rectangle around the reference numeral S. Also, both options may be used. So, the actual trajectory may be detected and analyzed within the machine and/or even a cut part has been taken from the workpiece and analyzed with an external, e.g., handheld mobile sensor, e.g. which might be implemented in a mobile device, like a smartphone. The sensor is configured to detect the actual trajectory, which has been instructed. Based thereupon, the processing module 100 is configured to detect the frequency dependent response of the laser processing machine LPM.

The processing module 100 is further configured for determining a result, comprising the actual trajectory in relation to the instructed target trajectory. The result serves to calculate and store frequency-dependent oscillation data for generating the frequency-dependent machine model in a memory MEM of the processing module 100. The processing module may comprise an output interface 104 for providing the result.

In particular, a calibration module 200 may be applied, which serves to calibrate the laser processing machine LPM. The calibration module 200 uses the result of the processing module, which may be provided via the output interface 104 to calibrate the laser processing machine LPM. Calibration signals may be sent to the laser processing machine LPM (depicted in Fig. 1 by the outgoing arrow). Alternatively, the calibration module 200 may use the control interface 102 of the processing module 100 to transmit the calibration signals to the laser processing machine LPM. In addition or alternatively, the result may be provided to the user. So, the output interface 104 may alternatively or in addition be implemented as a human machine interface, HMI.

In a preferred embodiment, the calibration of the laser processing machine may be initiated automatically. Alternatively, the calibration of the laser processing machine needs to be verified by a user before being executed on the laser processing machine LPM. For this, a selection signal may be received, in particular on the HMI via a user input. The selection signal indicates, whether the generated calibration data should be directly (i.e. without further - e.g., user - verification) applied for calibration. Alternatively or in addition the selection signal indicates the conditions for applying or executing the calibration. The conditions are defined by a set of indications, comprising at least a time indication (when to calibrate), a user profile indication (who is entitled to calibrate), and/or a machine condition indication (which operating conditions must be fulfilled for executing the calibration).

The calibration module 200 and in particular the machine model of the processing module 100 may be used for contour error correction. The error correction may be executed with or without dynamic beam shaping system.

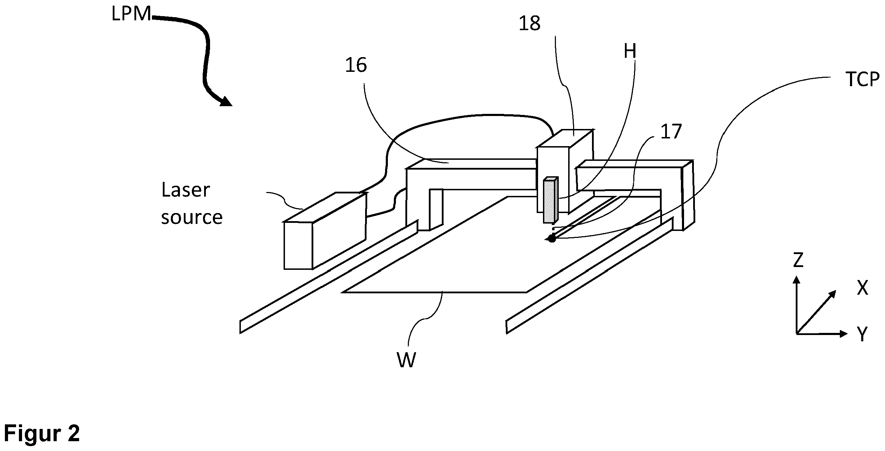

Fig. 2 shows a laser processing machine laser processing machine in the form of a flatbed cutting machine with several drive axes and a laser cutting head for laser cutting sheet workpieces, like metal workpieces or tubes.

In this example a flatbed laser cutting machine is shown for cutting flat workpieces W. Fig. 2 shows a front view of a laser cutting machine laser processing machine LPM in a schematic representation with a cutting grid (only indicated) on which a workpiece W to be processed is positioned and a cutting head H, a processing laser beam 17 and a tool centre point TCP. The bridge (Y-axis) is designated by the reference sign 16 and the Z-axis by the reference sign 18. As can be seen, the head H of the laser processing machine LPM is to be moved in X, Y and Z axis by means of drive axes. Due to the moved masses, inertia forces are applied, which are specific for the respective laser processing machine, its deployment (which kind of bridge, which components are attached etc.) and/or its masses.

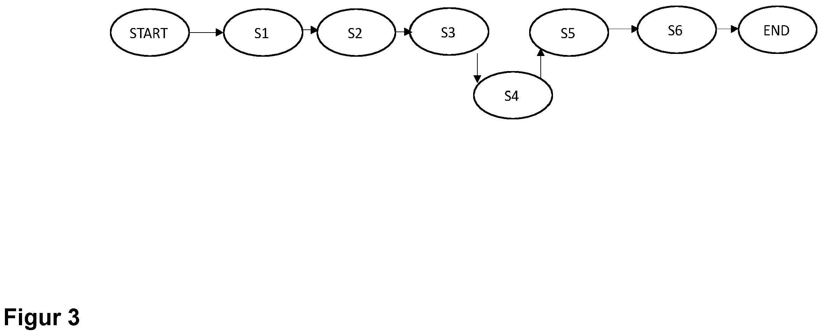

Fig. 3 is an exemplary flowchart of a computer-implemented method for generating a frequency-dependent machine model (in short: machine model). The machine model stores oscillation data which may be used to compensate a frequency-based oscillation behaviour of a laser processing machine LPM.

After start of the method, in step S1 a setpoint function, SPF, is received (read-in) or generated. The setpoint function is configured to excite the laser processing machine with at least two defined different frequencies for triggering a frequency-based oscillation behaviour as response of the laser processing machine LPM to said excitation.

In step S2 control commands are generated for the at least two drive axes for instructing the processing head H of the laser processing machine laser processing machine LPM to move along a target trajectory, whereby the control commands implement the generated or read-in setpoint function with the at least two defined different frequencies.

In step S3 the generated control commands are sent or transmitted to the laser processing machine laser processing machine LPM for instructing the laser processing machine LPM to execute in step S4 the machining (in particular cutting or engraving or processing) of a workpiece (flat or tube), during which the laser is at least temporarily switched on.

In step S5, the frequency dependent response of the laser processing machine laser processing machine LPM and its components (moved masses) is detected by means of at least one optical sensor S. The sensor signals are used for determining or detecting an actual trajectory of the machined workpiece.

In step S6 a result is determined. The result comprises the actual trajectory in relation to the instructed target trajectory. In particular, a deviation from said two trajectories is determined. The result serves to calculate and store frequency-dependent oscillation data for generating or updating the frequency-dependent machine model. The method may end.

In an optional embodiment, in a further step (not shown in the figure), the result may be provided on the output interface 104. The result may be provided to the user for manual verification. In addition or alternatively, the result may be provided to another digital processing entity for automatic verification (data reconciliation or matching with other verification data). In addition or alternatively, the result may be provided to the calibration module 200 for calibrating the laser processing machine LPM. Calibration may preferably be executed during a setup of the machine. Calibration is valid for different cutting plans and different cutting trajectories.

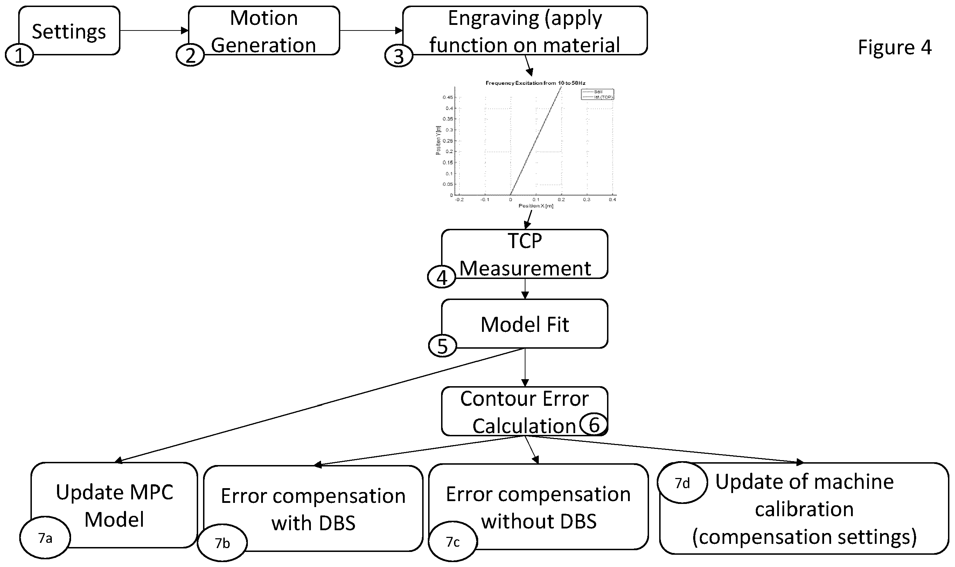

Fig. 4 shows in an overview figure a possible general procedure to generate or update an already existing machine model for four different use cases.

The suggested procedure may be summarized as follows:

1) Use pre-defined settings to generate frequency-changing set point function (e.g. freq. range, amplitude -> details below);

2) Generate the trajectory and provide set points (motion generation in Fig. 4);

3) Engrave or otherwise apply the frequency-changing function on the metal sheet/workpiece;

4) Measure the engraved curve (=Tool Center Point, TCP) by using a sensor, like an optical sensor S, e.g. a microscope, flatscope, insitu camera and/or a smartphone camera with a macrolense.

5) Use measured engraved curve (=Tool Center Point=TCP) to fit a machine model (system identification);

6) If needed, optionally, in a subsequent step, calculate the contour error (where to use the frequency-dependent model)

7) Use the result, with a generated or updated machine model to compensate frequency-dependent contour errors by adapting the set points such that the error is minimized (e.g. by adapting the position command of the drives). Error compensation can be done with or without dynamic beams shaping system, DBS.

Typically, a set of different SPFs is provided. A first setpoint function applies a frequency sweep. This first setpoint function is a superposition of at least two, and in particular three motions:

1. A linear (not accelerated) motion in the direction of one axis (e.g. X) and
2. An oscillation with a continually increasing frequency in the direction of the other axis (e.g. Y).
3. Optionally, a third motion may be included: A linear (not accelerated) motion in the direction of the oscillating axis to overcome static friction.

Inputs, with exemplary values for a laser cutting machine with max. acc. of 10 $m/s^2$:

- Oscillation amplitude (m): $A$ -> typically $A \approx 10^{-4}\ m$
- Frequency range of the oscillation (Hz): [$f_{min}$, $f_{max}$] -> typically [$10 Hz$, $70 Hz$]
- Constant underlying speeds (m/s): $u = dx/dt$, $v = dy/dt$

    $\rightarrow$ typically $u = 0.003\ m/s$, $v = 0.05\ m/s$

- Sampling time (s): $T_s$ -> typically $T_s \approx 10\text{-}3\ s$
- Measurement duration (s): $T\ max$ -> typically $T_{max} \approx 40\ s$

Output:

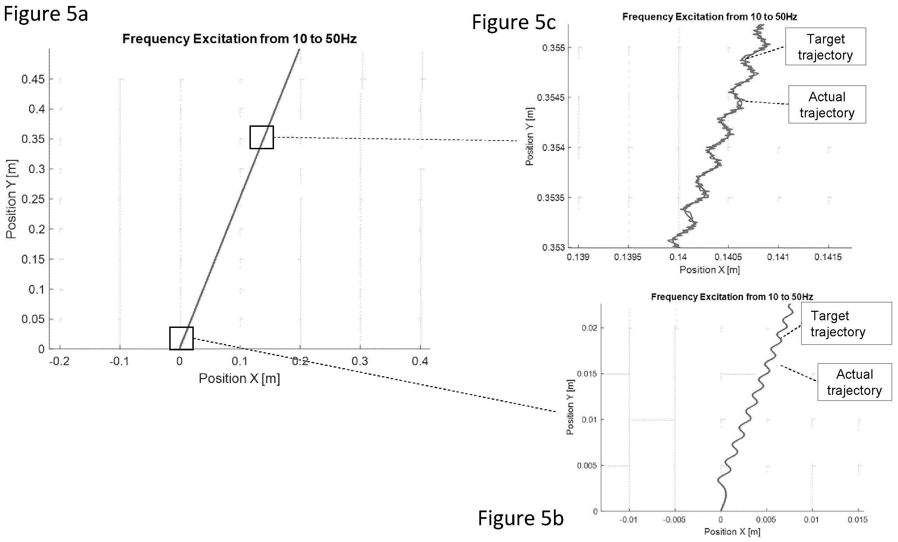

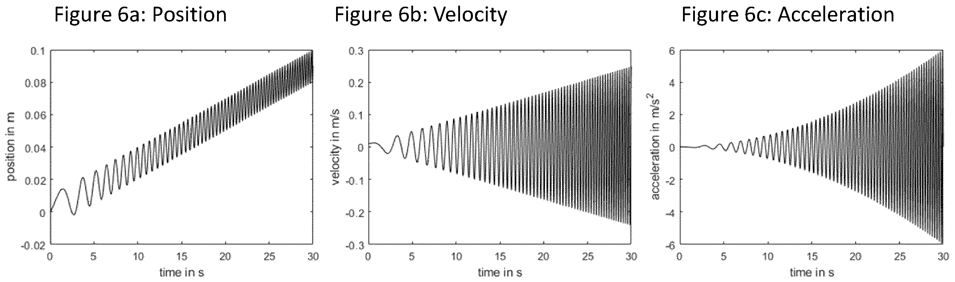

- Time samples (s): $t_i = 0 + i^* \, Ts$ where $i \, \varepsilon$ [0,1,2,3,4, ... , Tmax/Ts]
- Set point positions/Control commands (m): $(x_i = x \, (t_i) \mid y_i = Y(t_i))$ -> see figures 5 and 6.

**Fig. 5** shows application of the first SPF, which comprises a frequency sweep.

Depending on the requirements to the machine model, the laser power can be on during the entire motion or only around specific excitation frequencies (e.g. from 19.8Hz to 20.2Hz).

**Fig. 5a** shows the frequency excitation from 10 to 50 Hz. The target or instructed trajectory is shown and the actual measured trajectory is shown as well.

**Fig. 5b and 5c** show the system response in a zoom representation on two different sections to said excitation. As can be seen, there is a frequency-dependent deviation of the actual trajectory from the target trajectory caused by oscillation. Whereas in Fig. 5b) no significant deviation can be seen at low excitation frequency, the oscillation behaviour (mainly in the y-direction) is modulated with increasing frequency and is clearly visible in Fig. 5c).

**Fig. 6** shows set points of the first setpoint function (frequency sweep). Fig. 6a depicts the position over time, Fig. 6b the velocity over time and Fig. 6c the acceleration over time. Fig 6a shows the position over time, Fig. 6b is the corresponding velocity profile and 6c the corresponding acceleration profile (i.e. temporal derivatives from fig 6a).

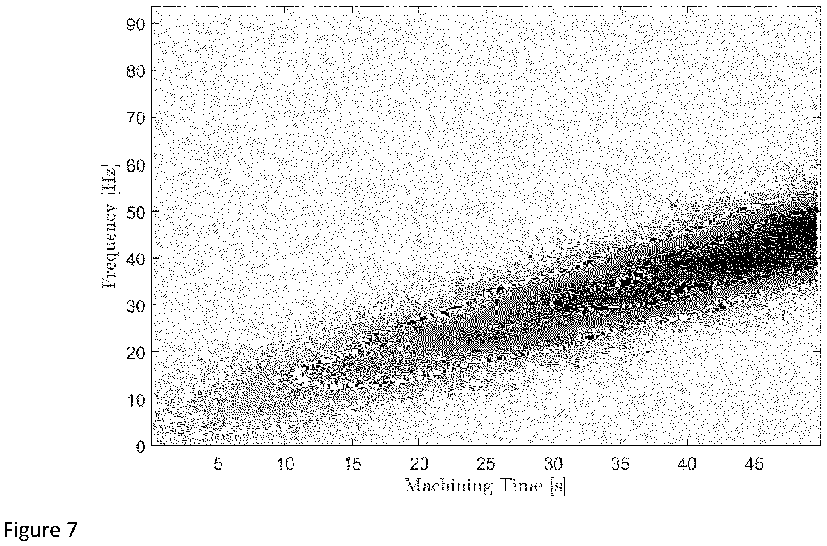

**Fig. 7** depicts a spectrogram of the first setpoint function (Frequency sweep). The frequency spectrum shows that for the relevant machining times between 0 and 50 seconds, a frequency in the range from 0 to 70 Hertz and even more dominant between 10 and 50 Hertz is present. Such a frequency spectrum helps to take into account the excitation frequencies depending on the machining time. The frequency spectrum can be customized for different devices and machining materials.

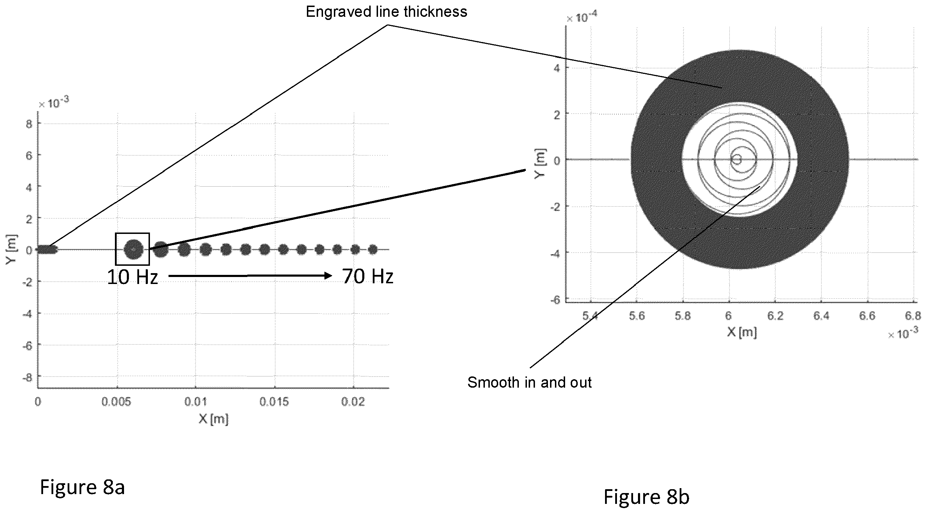

**Fig. 8** shows the application of the second SPF (SPF2), which may comprise different circles.

In particular, this set point function consists of multiple circles, each exiting the machine at a specific frequency resulting in different diameters. Due to the circular excitation with a constant frequency over a certain time duration, steady-state oscillations can be measured (without transient components) which can be advantageous.

The setpoints for a single circle comprise at least one of the following parts:

- Positioning at the center,
- Rotation with the given frequency with a continuous increase of the radius resulting in a non-engraved spiral (Laser power = 0W),
- Some rotations at the final radius without engraving (to reduce transient effects),
- At least one rotation at the final radius with engraving (-> engraved circle),
- Some rotations at the final radius without engraving, and/or
- Rotation at the same frequency with a continuous decrease of the radius resulting in a non-engraved spiral to standstill condition.

**Fig. 8a** an engraved or otherwise applied (e.g., cut) line thickness can be seen. **Fig. 8b** shows the engraved line with certain thickness and the fade in and fade out spiral in a zoom representation. As can be seen in the figure, the radius of the actual trajectory or the X and Y-axis amplitudes of an ellipse change with the fade in/fade out. After the fade in process and with the start of the engraving, the circle/ellipse is engraved with a different diameter or with different X and Y-axis amplitudes depending on the excitation frequency of the SPF2. The TCP motion can then be derived from the engraved amplitudes and from this the absolute value of the transfer function.

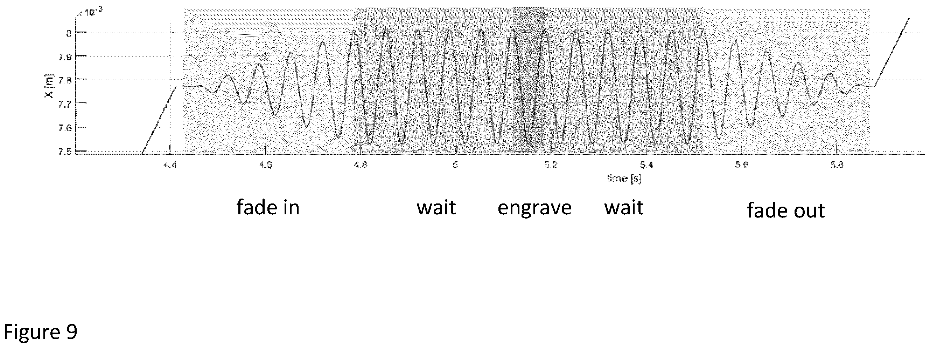

**Fig. 9** shows an application of the second setpoint function (e.g., circles) with different phases for one circle. The figure shows the undesired effects during the fade in / fade out. After the oscillation has stabilized, engraving is started after a certain waiting period in order to obtain an unaltered result.

Inputs (with exemplary values for a laser cutting machine with max. acc. of 10 $m/s^2$ ):

- Discrete frequencies to engrave circles on (Hz): [$f0, f1, f2, ... , fN$]
- typically -> [10Hz , 12$Hz$ , 14$Hz$ , ... , 70$Hz$ ]
- Sampling time (s): $Ts$ -> typically $Tss \approx 10^{-3} \, s$

Output:

- Time samples (s): $t_i = 0 + i^* \, Ts$ where $i \in \in$ [0,1,2,3,4, ... ]
- Set points positions/Control commands (m): $(x_i = x(t_i) \mid yi = y(t_i))$ -> see figure 8 and 9.

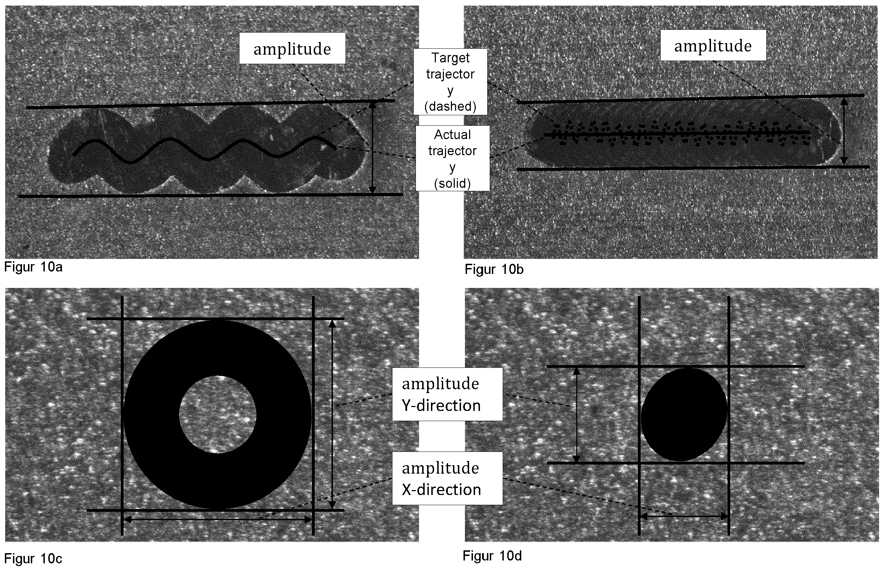

**Fig. 10a) and 10b)** show an amplitude measurement (solid outer line) together with the actual or measured trajectory (solid line) and the instructed or target trajectory (dashed line), as TCP curve for the first SPF. In Fig. 10a) the distance between the two horizontal lines corresponds to the kerf width of the cutting or engraving. Fig. 10a) shows no significant deviation in the oscillation between the target trajectory and the actual trajectory at a frequency of 10 Hertz.

The determined peak-to-peak amplitude, here in the y-direction, is shown. There is obviously a different behaviour in Figure 10b) with a changed frequency of 70 Hertz. Here the width of the engraved trajectory is smaller relative to 10a) and there is a greater deviation between the target trajectory and the actual trajectory. The determined peak-to-peak amplitude, here in the y-direction, is also shown.

**Fig. 10c) and 10d)** show an amplitude measurement (solid line) together with the actual and measured trajectory, as TCP curve for the second SPF. Fig. 10c) shows no significant deviation in the oscillation between the target trajectory and the actual trajectory at a frequency of 10 Hertz. The amplitude of the Y-axis and X-axis are in balance and a circle is engraved. The corresponding amplitudes, here in the x- and y-direction, are shown. There is obviously a different behaviour in Figure 10d) with a changed frequency of 70 Hertz. Here the amplitude in x- and y-direction are different, resulting in an ellipse shaped engraved form.

Generally, the TCP-Motion along the direction of the X-axis is assumed to be

$$X_{tcp}(t) = \hat{X}_{tcp}(f)\sin(2\pi f t)$$

where $\hat{X}_{tcp}(f)$ is the frequency dependent amplitude and $f$ is the excitation frequency (e.g. the frequency of the setpoint function along X).

Since both proposed setpoint functions stimulate the system with a slowly changing frequency or a single constant frequency, it is assumed that the system oscillates at the same excitation frequency.

The only left unknown in the TCP-Motion, the amplitude $\hat{X}_{tcp}(f)$, is given at discrete frequencies $f_i$ as $\hat{X}_{tcp}(f = f_i) = X_{pp}(f = f_i) - X_{pp}(f = 0)$
where $X_{PP}(f = 0)$ can be measured as the peak-to-peak amplitude of the engraved line for the first setpoint function (SPF1, see measurement in figure 10a and 10b) or the elongation of the engraved circle in the direction of the X-axis for the second setpoint function 2 (see measurement in figure 10c) and 10d).

The term

$$X_{PP}(f = 0)$$

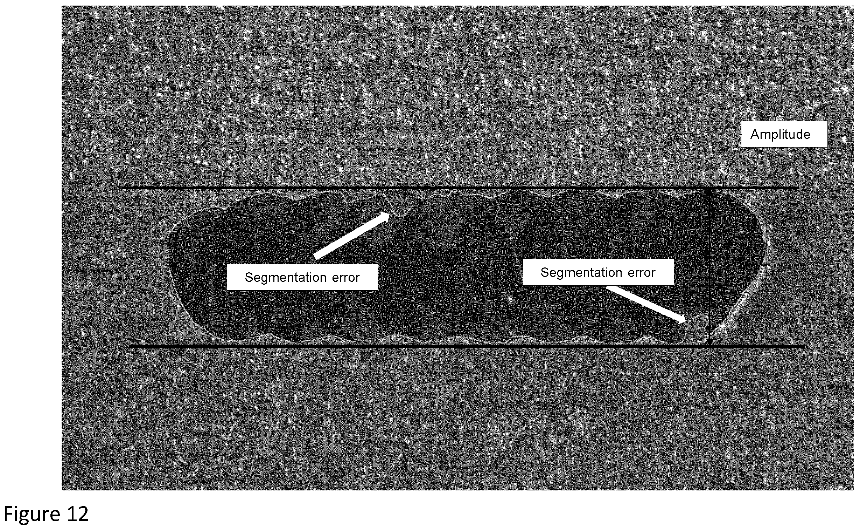

represents the thickness of the engraved line with no oscillation and can be measured independently of the chosen setpoint function as shown in figure 12.

The same procedure can be applied to estimate the motion of the TCP in any other directions (e.g. along the Y-axis). Note that to get an estimation of the two-dimensional TCP-Motion, the setpoint function 1 must be engraved in two orthogonal directions whereas the setpoint function 2 only needs one engraving since the engraved circles contain two-dimensional information.

Finally, the estimated TCP-Motion is used to deduce the absolute value of the transfer function:

$$|G(s)| = |X_{tcp}(s)/X_{cmd}(s)| = \hat{X}_{tcp}(f)/\hat{X}_{cmd}(f)$$

with $\hat{X}_{cmd}$ the amplitude of the setpoint function (see dashed line in figure 10) at discrete frequency points.

Alternatively, but not preferred, the TCP-Curve can be measured with an image segmentation and skeletonizing approach. The skeletonizing approach refers to a type or class of image processing methods. In these image processing methods, a flat image object is converted into an inner skeleton line, e.g., 1 pixel wide. In particular, these image processing methods may comprise methods for representing the shape in form of a line, in particular a shape is represented as a thin version of that shape that is equidistant to its boundaries. The skeleton usually emphasizes geometrical and topological properties of the shape, such as its connectivity, topology, length, direction, and width. Together with the distance of its points to the shape boundary, the skeleton can also serve as a representation of the shape (they contain all the information necessary to reconstruct the shape). However, at high frequencies the overlap of consecutive oscillation periods makes the measurement of the TCP-Curve very difficult. The oscillations become less and less visible with increasing frequency resulting in straight line for the TCP-Curve at high frequencies (see figure 10b). Similarly, the TCP-Curve for setpoint function 2 is estimated as a single point for high frequencies where the engraved lines overlap in the center, resulting in a filled circle / ellipse (see figure 10d) when using a skeletonizing approach.

With the described preferred procedure only an amplitude measurement of the engraved line is needed to deduce the absolute value of the TCP-transfer function. This amplitude measurement is relatively simple, robust, and applicable independent of the overlap of the separate oscillation periods or the appearance of a hole in the center of the engraved circle or curve. Further this amplitude measurement can be implemented in an image processing algorithm and is robust against small wrong segmentations (see figure 12).

The absolute value of the transfer function $|G(s)| = |X_{tcp}(s)/X_{cmd}(s)| \, |GG(ss)|$ can be used to fit a model. The exact procedure to fit a model depends on the complexity of the required model. For example, Haas identified based the absolute value of the transfer function a two-mass model where the TCP was described using a 4th order differential equation system (Set Point Optimisation for Machine Tools, https://doi.org/10.3929/ethz-b-000271470 ).

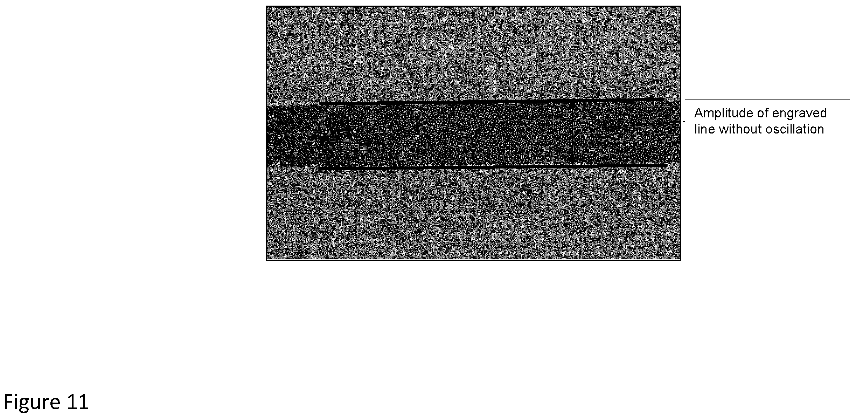

**Fig. 11** shows a measurement result of the thickness of the engraved line without oscillation $X\_pp \, (f = 0)$. The engraved section shows no or very little oscillation behaviour. The TCP movement can later be derived from the amplitude of this reference engraving in conjunction with the amplitude values at certain excitation frequencies, see Fig. 10.

**Fig. 12** shows an exemplary measurement of $Xpp$. This shows the robustness against some wrong segmentations from a simple amplitude measurement algorithm. The image processing algorithm, in particular the amplitude measurement algorithm, is used to determine/measure the amplitudes of the engraved lines from the captured images. It is important that individual outliers (segmentation errors) do not have a major impact on the determination of the amplitude, i.e. the algorithm is robust against such individual localized errors.

Generally, it is possible to define in a preparation phase different working areas on the workpiece, where the tests and/or the calibration are to be executed in order to achieve a good performance and/or to to compensate for any material properties and/or inaccuracies. Thus, different working areas on the workpiece may be defined and distinguished for subsequent calibration.

For example, different frequency ranges may be used. For example, a set of several, e.g., three frequency classes may be determined: rough, medium and fine. In the rough range, only a small, predefinable amount of frequencies may be applied (e.g., less than ten, e.g., five). In the medium range, a medium amount (more than in the rough range, but less than in the fine range) of frequencies may be applied (e.g., five - fifteen, e.g., ten). In the fine range, a high amount (more than in the medium range) of frequencies may be applied (e.g., > twenty, e.g., fifteen or twenty)

A contour error may be represented by deviating from the instructed geometry. For example, if a circle was instructed by the control commands which are executed by the laser processing machine LPM and an oval is measured as actual trajectory, then a contour error is to be determined.

In contrast to prior art, the model and its update generated here may be applied and valid for different cutting plans or for different parts to be cut or for different contours.

In an embodiment, a Bode Plot of an Y axis may be provided to the user via HMI.

The calibration method may be used to compensate any contour errors. For example, if a circle is instructed as target trajectory and a circle is cut, then no contour errors are present. Otherwise, if the resulting trajectory deviates from a circle, error compensation may be instructed. For example, contour error (pronounced in the Y direction) due to the amplification of the input signal (position value Y), which can be seen in the Bode plot at a certain frequency of e.g., 35Hz. If no or a not well-tuned model is used, the overshoot/exaggeration is not well represented and the contour error compensation before cutting will fail. This is why, this invention serves to improve cutting quality.

Generally, the calibration method may be initiated and executed in the production phase and during normal machine operation, e.g., after components have been added or removed from the laser processing machine or after any other changes or after a certain time period (e.g., to compensate wear or tear). The calibration method may be executed iteratively.

For summarizing, the present invention relates to the generation (or update of) a machine model, which takes into account and/or corrects the specific resonant frequency behaviour of a specific laser processing system/machine. The method uses the machine model to select the set points (position data) in such a way that the deviation between the target geometry and the actual cut part is minimized. This method can be used during initial set-up and as required over time. The method may be carried out by means of engraving or cutting or otherwise applying on a test sheet or on the material to be cut.

**Claims**

1.  Method for generating a frequency-dependent machine model, in which oscillation data are stored which may be used to compensate a frequency-based oscillation behaviour of a laser processing machine (LPM) with a processing head (H) which is to be moved with at least two drive axes, having the following method steps:

    - Reading in a setpoint function or reading in parameters for generating (S1) a setpoint function (SPF1, SPF2), wherein the setpoint function is configured to excite the laser processing machine (LPM) with at least two defined different frequencies for triggering a frequency-based oscillation behaviour as response of the laser processing machine (LPM) to the excitation;
    - Generating (S2) control commands for the at least two drive axes for instructing the processing head (H) of the laser processing machine (LPM) to move along a target trajectory, whereby the control commands implement the generated or read-in setpoint function (SPF1, SPF2);
- Transmitting (S3) the generated control commands to the laser processing machine (LPM) for execution for machining (S4) a workpiece, during which the laser is at least temporarily switched on;
- Detecting (S5) the frequency dependent response of the laser processing machine (LPM) by means of at least one optical sensor (S) for detecting an actual trajectory of the machined workpiece;
- Determining (S6) a result, comprising the actual trajectory in relation to the instructed target trajectory, wherein the result serves to calculate and store frequency-dependent oscillation data for generating the frequency-dependent machine model.

2. Method according to claim 1, wherein the excitation of the laser processing machine (LPM) according to the setpoint function (SPF1, SPF2) is defined by oscillation parameters, comprising an amplitude and/or a frequency and/or in particular a resonant frequency of the laser processing machine (LPM) and/or parts thereof.

3. Method according to any of the preceding method claims, wherein the frequency of the oscillation may be chosen to be continuously increasing or decreasing in a predefined frequency range and/or has discrete measurement points at specific preset frequencies of the frequency range.

4. Method according to any of the preceding method claims, wherein a first setpoint function (SPF1) comprises a superposition of at least 2 movements of the processing head (H):

   - A linear, in particular non accelerated, movement in the direction of a first drive axis;
   - An oscillation with a frequency in the direction of a second axis and/or
   - Optionally: A linear movement in the direction of the second axis to overcome a static friction.

5. Method according to claim 4, wherein the target trajectory is instructed according to the second setpoint function (SPF2) such as having excited oscillation movement components in at least the first and second axis for being able to later in a subsequent phase compensate movements with the first and second axes components.

6. Method according to claim 4 or 5, wherein the control commands for the first setpoint function (SPF1) are executed in at least two orthogonal dimensions.

7. Method according to any of the preceding method claims, wherein the first and/or second setpoint function (SPF1, SPF2) covers a frequency sweep in a predefined frequency range of different excitation frequencies, wherein defined different frequencies of the frequency range may be selected to be discrete or in case of the first setpoint function (SPF1) to be alternatively continuous.

8. Method according to any of the preceding method claims, wherein a second setpoint function (SPF2) comprises a set of circles, each exciting the laser processing machine (LPM) at a specific frequency, resulting in different diameters of the circles.

9. Method according to any of the preceding method claims, wherein the laser is activated in phases or continuously and/or with different laser power parameters during the execution of the control commands, in particular after a transient phase of adverse or unintentional oscillations.

10. Method according to any of the preceding method claims 4 to 9, wherein detecting the actual trajectory comprises the following steps which may be executed in arbitrary sequence:

    - measuring a thickness of the actual trajectory without oscillation in an image acquired by the optical sensor;
    - measuring an amplitude, preferably a peak-to-peak amplitude, of the machined, in particular engraved, target trajectory according to the first setpoint function (SPF1);
    and/or
    - measuring a dimension of the machined, in particular engraved, target trajectory according to the second setpoint function (SPF2);

    based on the measured amplitude and/or measured diameter: calculating a movement of the tool center point (TCP).

11. Method according to any of the preceding method claims, wherein determining the actual trajectory in relation to the instructed target trajectory may be executed by means of image processing, in particular by comparing the actual trajectory with the instructed trajectory and/or by calculating the actual trajectory based on a detected amplitude, in particular peak-to-peak amplitude, according to the first setpoint function (SPF1) of the machined trajectory and a determination of a thickness of the machined trajectory without oscillations.

12. Method according to any of the preceding method claims, wherein determining the actual trajectory in relation to the instructed target trajectory according to the second setpoint function (SPF2) may be executed by the elongation of the machined circle in the direction of at least one axis and a determination of a thickness of the machined trajectory without oscillations.

13. Calibration method for using a generated frequency-dependent machine model, which has been generated with a method according to any of the preceding method claims for generating calibration data for calibrating the laser processing machine (LPM) with respect to a compensation of a frequency-based oscillation behaviour of a laser processing machine (LPM), in particular after commissioning and/or before a production phase for executing productive cuts according to a set of different cutting plans.

14. Processing module (100) configured for executing a method according to any of the preceding method claims for generating a frequency-dependent machine model, in which oscillation data are stored which may be used to compensate a frequency-based oscillation behaviour of a laser processing machine laser processing machine (LPM) with a processing head (H) which is to be moved with at least two drive axes, comprising:

   - An excitation interface (101), configured for reading in a setpoint function or reading in parameters for generating a setpoint function, wherein the setpoint function is configured to excite the laser processing machine (LPM) with at least two defined different frequencies for triggering a frequency-based oscillation behaviour as response of the laser processing machine (LPM) to the excitation;
   - wherein the processing module (100) is configured for generating control commands for the at least two drive axes for instructing the processing head (H) of the laser processing machine (LPM) to move along a target trajectory, whereby the control commands implement the generated or read setpoint function (SPF1, SPF2);
   - A control interface (102) for transmitting the generated control commands to the laser processing machine (LPM) to instruct the laser processing machine (LPM) to execute the generated control commands for machining a workpiece, during which the laser is at least temporarily switched on;
   - A sensor interface (103) to at least one optical sensor (S), which is configured for detecting an actual trajectory of the machined workpiece, based upon which the processing module (100) is configured for detecting the frequency dependent response of the laser processing machine (LPM);
   - wherein the processing module (100) is configured for determining a result, comprising the actual trajectory in relation to the instructed target trajectory, wherein the result serves to calculate and store frequency-dependent oscillation data for generating the frequency-dependent machine model.

15. Calibration module (200) for calibrating a laser processing machine (LPM), which is configured to execute the method according to claim 13.

16. A calibration system with a calibration module (200) according to claim 15 and a laser processing machine (LPM).

17. A computer program comprising program elements which induce a processing module (100) to carry out the steps of the method for generating a frequency-dependent machine model according to any one of the preceding method claims 1 to 12 or a calibration method according to claims 13, when the program elements are loaded into a memory of the processing module (100).

**Amended claims in accordance with Rule 137(2) EPC.**

1. Method for generating a frequency-dependent machine model, in which oscillation data are stored which may be used to compensate a frequency-based oscillation behaviour of a laser processing machine (LPM) with a processing head (H) which is to be moved with at least two drive axes, having the following method steps:

   - Reading in a setpoint function or reading in parameters for generating (S1) a setpoint function (SPF1, SPF2), wherein the setpoint function is configured to excite the laser processing machine (LPM) with at least two defined different frequencies for triggering a frequency-based oscillation behaviour in an actual trajectory executed by the processing head (H) as response of the laser processing machine (LPM) to the excitation;

- Generating (S2) control commands for the at least two drive axes for instructing the processing head (H) of the laser processing machine (LPM) to move along a target trajectory, whereby the control commands implement the generated or read-in setpoint function (SPF1, SPF2);
- Transmitting (S3) the generated control commands to the laser processing machine (LPM) for execution for machining (S4) a workpiece, during which the laser is at least temporarily switched on;
- Detecting (S5) the frequency dependent response of the laser processing machine (LPM) by means of at least one optical sensor (S) for detecting an actual trajectory of the machined workpiece;
- Determining (S6) a result, comprising the actual trajectory in relation to the instructed target trajectory, wherein the result serves to calculate and store frequency-dependent oscillation data for generating the frequency-dependent machine model.

2. Method according to claim 1, wherein the excitation of the laser processing machine (LPM) according to the setpoint function (SPF1, SPF2) is defined by oscillation parameters, comprising an amplitude and/or a frequency and/or in particular a resonant frequency of the laser processing machine (LPM) and/or parts thereof.

3. Method according to any of the preceding method claims, wherein the frequency of the oscillation may be chosen to be continuously increasing or decreasing in a predefined frequency range and/or has discrete measurement points at specific preset frequencies of the frequency range.

4. Method according to any of the preceding method claims, wherein a first setpoint function (SPF1) comprises a superposition of at least 2 movements of the processing head (H):

- A linear, in particular non accelerated, movement in the direction of a first drive axis;
- An oscillation with a frequency in the direction of a second axis and/or
- Optionally: A linear movement in the direction of the second axis to overcome a static friction.

5. Method according to claim 4, wherein the target trajectory is instructed according to the second setpoint function (SPF2) such as having excited oscillation movement components in at least the first and second axis for being able to later in a subsequent phase compensate movements with the first and second axes components.

6. Method according to claim 4 or 5, wherein the control commands for the first setpoint function (SPF1) are executed in at least two orthogonal dimensions.

7. Method according to any of the preceding method claims, wherein the first and/or second setpoint function (SPF1, SPF2) covers a frequency sweep in a predefined frequency range of different excitation frequencies, wherein defined different frequencies of the frequency range may be selected to be discrete or in case of the first setpoint function (SPF1) to be alternatively continuous.

8. Method according to any of the preceding method claims, wherein a second setpoint function (SPF2) comprises a set of circles, each exciting the laser processing machine (LPM) at a specific frequency, resulting in different diameters of the circles.

9. Method according to any of the preceding method claims, wherein the laser is activated in phases or continuously and/or with different laser power parameters during the execution of the control commands, in particular after a transient phase of adverse or unintentional oscillations.

10. Method according to any of the preceding method claims 4 to 9, wherein detecting the actual trajectory comprises the following steps which may be executed in arbitrary sequence:

- measuring a thickness of the actual trajectory without oscillation in an image acquired by the optical sensor;
- measuring an amplitude, preferably a peak-to-peak amplitude, of the machined, in particular engraved, target trajectory according to the first setpoint function (SPF1); and/or
- measuring a dimension of the machined, in particular engraved, target trajectory according to the second setpoint function (SPF2);

based on the measured amplitude and/or measured diameter: calculating a movement of the tool center point (TCP).

11. Method according to any of the preceding method claims, wherein determining the actual trajectory in relation to the instructed target trajectory may be executed by means of image processing, in particular by comparing the actual trajectory with the instructed trajectory and/or by calculating the actual trajectory based on a detected amplitude, in particular peak-to-peak amplitude, according to the first setpoint function (SPF1) of the machined trajectory and a determination of a thickness of the machined trajectory without oscillations.

12. Method according to any of the preceding method claims, wherein determining the actual trajectory in relation to the instructed target trajectory according to the second setpoint function (SPF2) may be executed by the elongation of the machined circle in the direction of at least one axis and a determination of a thickness of the machined trajectory without oscillations.

13. Calibration method for using a generated frequency-dependent machine model, which has been generated with a method according to any of the preceding method claims for generating calibration data for calibrating the laser processing machine (LPM) with respect to a compensation of a frequency-based oscillation behaviour of a laser processing machine (LPM), in particular after commissioning and/or before a production phase for executing productive cuts according to a set of different cutting plans.

14. Processing module (100) configured for executing a method according to any of the preceding method claims for generating a frequency-dependent machine model, in which oscillation data are stored which may be used to compensate a frequency-based oscillation behaviour of a laser processing machine laser processing machine (LPM) with a processing head (H) which is to be moved with at least two drive axes, comprising:

- An excitation interface (101), configured for reading in a setpoint function or reading in parameters for generating a setpoint function, wherein the setpoint function is configured to excite the laser processing machine (LPM) with at least two defined different frequencies for triggering a frequency-based oscillation behaviour in an actual trajectory executed by the processing head (H) as response of the laser processing machine (LPM) to the excitation;
- wherein the processing module (100) is configured for generating control commands for the at least two drive axes for instructing the processing head (H) of the laser processing machine (LPM) to move along a target trajectory, whereby the control commands implement the generated or read setpoint function (SPF1, SPF2);
- A control interface (102) for transmitting the generated control commands to the laser processing machine (LPM) to instruct the laser processing machine (LPM) to execute the generated control commands for machining a workpiece, during which the laser is at least temporarily switched on;
- A sensor interface (103) to at least one optical sensor (S), which is configured for detecting an actual trajectory of the machined workpiece, based upon which the processing module (100) is configured for detecting the frequency dependent response of the laser processing machine (LPM);
- wherein the processing module (100) is configured for determining a result, comprising the actual trajectory in relation to the instructed target trajectory, wherein the result serves to calculate and store frequency-dependent oscillation data for generating the frequency-dependent machine model.

15. Calibration module (200) for calibrating a laser processing machine (LPM), which is configured to execute the method according to claim 13.

16. A calibration system with a calibration module (200) according to claim 15 and a laser processing machine (LPM).

17. A computer program comprising program elements which induce a processing module (100) to carry out the steps of the method for generating a frequency-dependent machine model according to any one of the preceding method claims 1 to 12 or a calibration method according to claims 13, when the program elements are loaded into a memory of the processing module (100).

**Figur 1**

Figur 2

**Figur 3**

Figure 4

1 Settings

2 Motion Generation

3 Engraving (apply function on material)

4 TCP Measurement

5 Model Fit

6 Contour Error Calculation

7a Update MPC Model

7b Error compensation with DBS

7c Error compensation without DBS

7d Update of machine calibration (compensation settings)

Figure 5a

Frequency Excitation from 10 to 50Hz

Position Y [m]

Position X [m]

Figure 5c

Frequency Excitation from 10 to 50Hz

Target trajectory

Actual trajectory

Position Y [m]

Position X [m]

Figure 5b

Frequency Excitation from 10 to 50Hz

Target trajectory

Actual trajectory

Position Y [m]

Position X [m]

Figure 6a: Position

Figure 6b: Velocity

Figure 6c: Acceleration

Figure 7

Engraved line thickness

10 Hz ──────────▶ 70 Hz

Smooth in and out

Figure 8a

Figure 8b

Figure 9

Figur 10b

Figur 10a

Figur 10d

Figur 10c

Amplitude of engraved line without oscillation

Figure 11

Figure 12

Europäisches
Patentamt
European
Patent Office
Office européen
des brevets

# EUROPEAN SEARCH REPORT

**Application Number**

EP 24 18 1779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/130740 A1 (CHAN DANNY [DE]) 27 April 2023 (2023-04-27) | 1-9, 13-17 | INV. G05B19/19 |
| A | * figure 1 * <br> * paragraph [0017] * <br> * paragraph [0021] - paragraph [0022] * <br> * paragraph [0026] - paragraph [0029] * <br> ----- | 10-12 | G05B19/404 |
| Y | US 2018/210407 A1 (NAMIE MASAKI [JP] ET AL) 26 July 2018 (2018-07-26) | 1-9, 13-17 | |
| A | * figures 17,7 * <br> * paragraph [0048] * <br> * paragraph [0056] * <br> * paragraph [0152] * <br> * paragraph [0172] * <br> * paragraph [0077] - paragraph [0078] * <br> ----- | 10-12 | |
| A | US 2018/065250 A1 (MURAKAMI YOSHINORI [JP]) 8 March 2018 (2018-03-08) <br> * the whole document * <br> ----- | 1-17 | |

**TECHNICAL FIELDS SEARCHED (IPC)**

G05B
B23K

The present search report has been drawn up for all claims

| Place of search | Date of completion of the search | Examiner |
|---|---|---|
| The Hague | 9 December 2024 | Antonopoulos, A |

EPO FORM 1503 03.82 (P04C01)

## ANNEX TO THE EUROPEAN SEARCH REPORT
## ON EUROPEAN PATENT APPLICATION NO.

EP 24 18 1779

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | | | Publication date | Patent family member(s) | | Publication date |
|---|---|---|---|---|---|---|
| US 2023130740 | A1 | | 27-04-2023 | CN | 116021178 A | 28-04-2023 |
| | | | | DE | 102022121243 A1 | 27-04-2023 |
| | | | | US | 2023130740 A1 | 27-04-2023 |
| US 2018210407 | A1 | | 26-07-2018 | CN | 108345270 A | 31-07-2018 |
| | | | | EP | 3352029 A1 | 25-07-2018 |
| | | | | JP | 2018120327 A | 02-08-2018 |
| | | | | US | 2018210407 A1 | 26-07-2018 |
| US 2018065250 | A1 | | 08-03-2018 | CN | 107803589 A | 16-03-2018 |
| | | | | CN | 207127389 U | 23-03-2018 |
| | | | | DE | 102017008426 A1 | 08-03-2018 |
| | | | | JP | 6382897 B2 | 29-08-2018 |
| | | | | JP | 2018039039 A | 15-03-2018 |
| | | | | US | 2018065250 A1 | 08-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZIRN** ; **WEIKERT**. *Modelling and Simulation of Highly Dynamic Manufacturing Systems*, https://www.springer.com/de/book/9783540258179
- **HAAS**. *Set Point Optimisation for Machine Tools*, https://doi.org/10.3929/ethz-b-000271470

- **N. LANZ** ; **D. SPESCHA** ; **S. WEIKERT** ; **K. WEGENER**. Efficient Static and Dynamic Modelling of Machine Structures with Large Linear Motions. *International Journal of Automation Technology*, 2018, vol. 12, 622-630